# EUROPÄISCHE PATENTSCHRIFT

(11) **EP 1 456 572 B1**
(45) Veröffentlichungstag und Bekanntmachung des Hinweises auf die Patenterteilung: **08.03.2006**
(21) Anmeldenummer: 02782613.0
(22) Anmeldetag: 17.12.2002
(51) Int. Cl.: F16L 11/115, F16L 25/00

(54) **LEITUNGSROHR AUS KUNSTSTOFF UND ROHRLEITUNG MIT EINEM LEITUNGSROHR SOWIE VERFAHREN ZUR HERSTELLUNG EINES LEITUNGSROHRES**
PLASTIC PIPE, PIPING COMPRISING A PIPE AND A METHOD FOR PRODUCING A PIPE
TUBE DE CONDUITE EN MATIERE PLASTIQUE, CONDUITE COMPRENANT UN TUBE DE CONDUITE ET PROCEDE POUR PRODUIRE UN TUBE DE CONDUITE

(30) Priorität: 21.12.2001 CH 234401
(43) Veröffentlichungstag der Anmeldung: 15.09.2004
(73) Patentinhaber: GEBERIT TECHNIK AG, 8645 Jona (CH)
(72) Erfinder: DITTLI, Erich, CH-8864 Reichenburg (CH); HUBER, René, CH-9200 Gossau (CH)
(74) Vertreter: Isler & Pedrazzini AG
(86) Internationale Anmeldenummer: PCT/CH2002/000702
(87) Internationale Veröffentlichungsnummer: WO 2003/054430

(56) Entgegenhaltungen:
- EP-A- 0 385 465
- DE-A- 19 725 051
- US-A- 4 819 970

## Beschreibung

Die Erfindung betrifft ein Leitungsrohr aus Kunststoff gemäss Oberbegriff des Anspruchs 1.

Leitungsrohre aus Kunststoff, insbesondere für Abwässer, sind im Stand der Technik seit langem bekannt. Sie dienen beispielsweise zum Verbinden von Sanitärapparaten, beispielsweise Bidets, Badewannen und Duschwannen mit einer Entsorgungsleitung. Solche Leitungsrohre müssen an ihren Enden angeschlossen werden, beispielsweise an genormte Abwasserformstücke.

Aus der DE-A-197 25 051 ist ein Leitungsrohr bekannt geworden, das im Spritzgussverfahren gefertigt ist und das aussenseitig gewellte Abschnitt sowie aussenseitig glattzylindrische Abschnitte aufweist. Die beiden Enden des Leitungsrohres sind jeweils als Anschlussstutzen ausgebildet. Diese Anschlussstutzen besitzen jeweils an der Aussenseite wenigstens einen angeformten Ringwulst als Haltemittel beim lösesicheren Aufstecken des Anschlussstutzens.

Aus der EP 0 385 465 A2 ist ein Leitungsrohr bekannt geworden, das ein koextrudiertes Verbundrohr ist, das in seinem einen Endbereich zu einer Rohrmuffe aufgeweitet ist. Das Leitungsrohr wird während seiner Herstellung zur genannten Muffe aufgeweitet. Wenigstens ein Bereich des Leitungsrohrs ist wellig ausgebildet. In einem der Wellentäler ist ein umlaufender Dichtungsring angeordnet, der an der Verbindungsstelle einen Flüssigkeitsaustritt verhindern soll.

Der Erfindung liegt die Aufgabe zugrunde, ein Leitungsrohr der genannten Gattung zu schaffen, das noch einfacher und dennoch funktionssicher montierbar ist.

Die Aufgabe ist bei einem gattungsgemässen Leitungsrohr gemäss Anspruch 1 gelöst. Bei der Montage kann das Leitungsrohr im Bereich eines glattzylindrischen Abschnittes so abgelängt werden, dass die Haltemittel mit einem Verbindungsstück verbindbar sind, beispielsweise mit diesem verrastbar sind. Sind die Haltemittel gemäss einer Weiterbildung der Erfindung umlaufende Rippen, so lässt sich damit eine besonders sichere und einfache Steckverbindung herstellen, bei welcher diese Rippen auf ein Verbindungsstück aufgerastet sind.

Nach einer Weiterbildung der Erfindung weist jeder glattzylindrische Abschnitt zwei Endhaltemittel auf, die unmittelbar an einen aussenseitig gewellten Bereich anschliesse. Sind die aussenseitig gewellten und innenseitig glatten Abschnitte gemäss einer Weiterbildung der Erfindung flexibel ausgebildet, so kann unmittelbar nach einer Anschlussstelle das Leitungsrohr beispielsweise um 90° gebogen werden. Dies ermöglicht ein besonders flexibles verlegen des Leitungsrohres.

Die Erfindung betrifft zudem eine Rohrleitung mit wenigstens einem solchen Leitungsrohr und wenigstens einem Verbindungsstück. Diese Rohrleitung ist dadurch gekennzeichnet, dass das Verbindungsstück ein Schnapporgan aufweist, das auf ein Haltemittel des Leitungsrohres aufgerastet ist. Die Erfindung betrifft zudem ein Verfahren zur Herstellung einer Rohrleitung mit wenigstens einem solchen Leitungsrohr und einem Verbindungsstück.

Ein Ausführungsbeispiele der Erfindung werden nachfolgend anhand der Zeichnung näher erläutert. Es zeigen:
- Figur 1: eine räumliche Darstellung eines Abschnittes eines erfindungsgemässen Leitungsrohres,
- Figur 2: eine Ansicht des Abschnittes gemäss Fig. 1,
- Figur 3: schematisch mehrere Sanitärapparate, die mit Rohrleitungen an einen Fallstrang angeschlossen sind,
- Figur 4: schematisch eine Ansicht einer Verbindung zwischen einem Leitungsrohr und einem Formstück,
- Figur 5: ein Längsschnitt durch eine Verbindung zwischen einem Leitungsrohr und einem Formstück,
- Figur 6: ein Schnitt entlang der Linie VI-VI der Fig. 4,
- Figur 7: eine weitere Ansicht der Verbindung gemäss Fig. 4 und
- Figur 8: einen Schnitt durch eine Verbindung zwischen zwei Leitungsrohren.

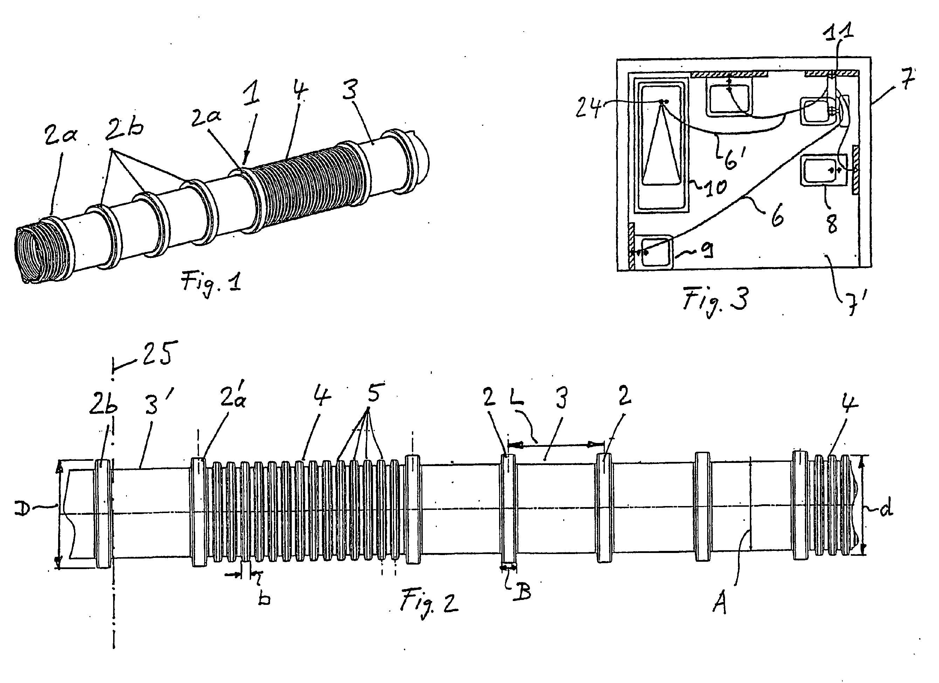

Das in den Figuren 1 und 2 abschnittsweise gezeigte Leitungsrohr 1 ist aus einem geeigneten Kunststoff, beispielsweise aus Polyethylen hergestellt und besitzt in gleichen Abständen ein oder mehrere glattzylindrische Abschnitte 3 sowie gewellte Abschnitte 4. Die gewellten Abschnitte 4 besitzen jeweils eine Mehrzahl von umlaufenden Rippen 5 und sind flexibel. Die glattzylindrischen Abschnitte 3 sind hingegen im wesentlichen starr. Das Leitungsrohr 1, das vorzugsweise von einem Endlosrohrstrang abgelängt wird, dient zur Herstellung von Rohrleitungen 6 und 6', mit denen gemäss Fig. 3 Sanitärapparate oder -geräte, beispielsweise ein Bidet 8, eine Duschwanne 9 oder eine Badewanne 10 an einen Fallstrang 11 anschliessbar sind. Diese Rohrleitungen 6 und 6' sind wie üblich im Boden 7' eines Gebäuderaumes 7 verlegt. Aufgrund der Flexibilität der gewellten Abschnitte 4 können die Rohrleitungen 6 und 6' im wesentlichen in beliebiger Form im Boden 7' verlegt werden, wobei insbesondere auch Biegungen um 90° möglich sind. Für den Anschluss der Sanitärapparate wird die Rohrleitung 6 an der Wand hochgezogen.

Damit die Rohrleitungen 6 und 6' an den Sanitärapparaten 8, 9 und 10 angeschlossen werden können, ist jeweils das eine Ende der Rohrleitung 6 bzw. 6' an ein Verbindungsstück 13 angeschlossen, das ein Übergangsstück zu einem Formstück 17 bildet. Dieses Formstück 17 bildet beispielsweise mit einer Aufweitung 20 ein Gehäuse für einen Ablauf 24 der Badewanne 10. Zur Verbindung des Leitungsrohres 1 mit dem Verbindungsstück 13 sind jeweils zwischen zwei gewellten Abschnitten 4 Haltemittel 2 angeformt, die vorzugsweise als umlaufende Rippen ausgebildet sind. Die Haltemittel 2, die zwischen zwei gewellten Abschnitten 4 angeordnet sind, bestehen aus zwei Haltemitteln 2a, die unmittelbar an einen gewellten Abschnitt 4 anschliessen und Haltemitteln 2b, welche zwischen den Haltemitteln 2a in vorzugsweise gleichen Abständen zueinander angeordnet sind.

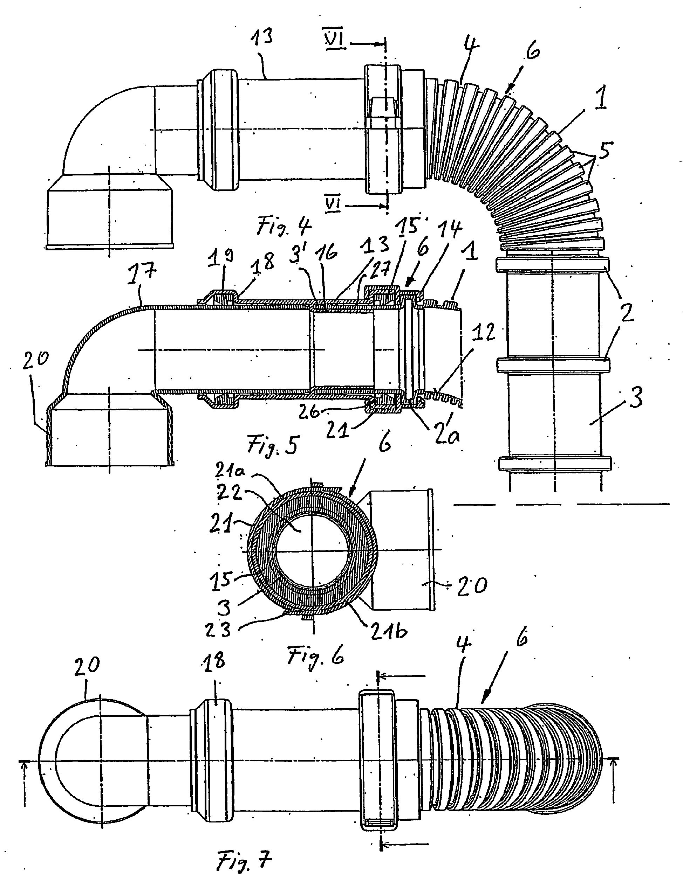

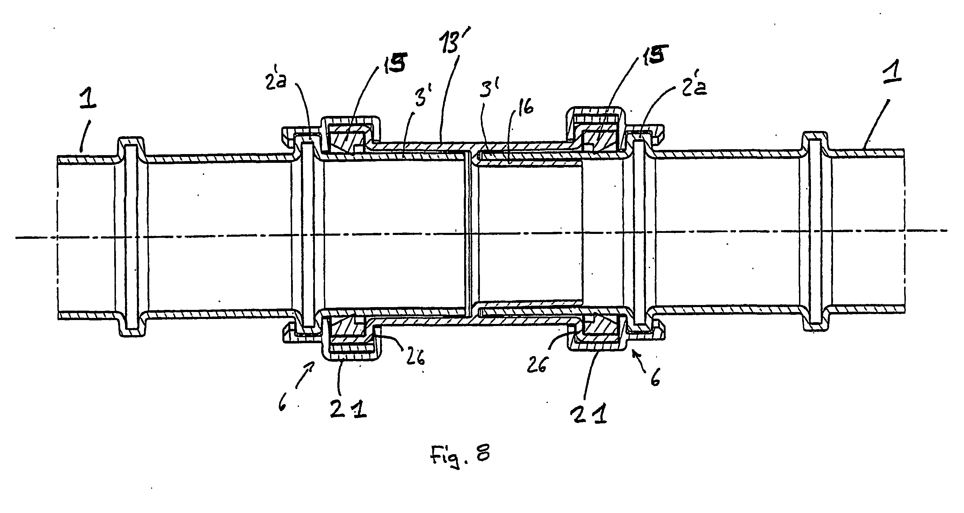

Um ein Leitungsrohr 1 an das Verbindungsstück 13 anzuschliessen, wird es so abgelängt, dass das anzuschliessende Ende mit einem glatten Abschnitt 3' endet, wie dies in Fig. 5 gezeigt ist. Entsprechend wird das Leitungsrohr 1 abgelängt. Die Fig. 2 zeigt mit der strichpunktierten Linie 25 eine Ebene, in welcher das Leitungsrohr 1 so abgelängt werden kann, dass ein freier Abschnitt 3' gebildet wird, der mit einem anschliessenden Haltemittel 2a' die in Fig. 5 gezeigte Steckverbindung ermöglicht. Diese Verbindung kann grundsätzlich lose oder fest sein. Sie ist gemäss Fig. 5 eine Schnapp- oder Rastverbindung. Hierzu ist ein in Fig. 5 gezeigter Verbindungsring 21 vorgesehen, welcher eine Schulter 26 des Verbindungsstücks 13 umgreift und der mit Rastzungen 14 am Haltemittel 2a' aufgerastet ist. Die Schulter 26 nimmt einen Dichtungsring 15 auf, welcher an der Aussenseite des glatten Abschnittes 3' anliegt und damit das Leitungsrohr 1 gegenüber dem Verbindungsstück 13 abdichtet. Der glatte Abschnitt 3' greift wie ersichtlich in eine Tasche 27 ein, die durch ein inneres Führungsteil 16 gebildet wird. Dieses Führungsteil 16 bildet gleichzeitig einen Anschlag für das Formstück 17, das mit einem Dichtungsring 19, der in einem Wulst 18 des Verbindungsstücks 13 untergebracht ist, abgedichtet ist. Der Verbindungsring 21 ist gemäss Fig. 6 aus zwei Teilen 21a und 21b hergestellt, die mit Haken 23 miteinander verbunden sind. Die Verbindung zwischen dem Leitungsrohr 1 und dem Verbindungsstück 13 ist wie ersichtlich eine Steckverbindung. Diese ist vorzugsweise eine standardisierte Steckverbindung für den Anschluss an Abwasserformstücke beispielsweise das Formstück 17. Es sind aber auch andere entsprechende und insbesondere genormte Abwasserformstücke denkbar.

An das Haltemittel 2a' kann gemäss den Figuren 4, 5 und 7 unmittelbar ein gewellter und somit flexibler Abschnitt 4 anschliessen. Dies hat den Vorteil, dass das Leitungsrohr 1 unmittelbar nach dem Verbindungsstück 13 bis um 90° gebogen werden kann. Dies vereinfacht einen Anschluss beispielsweise an der Unterseite eines Sanitärapparates und vermeidet Spannungen auf die Steckverbindung und das Formstück 17. Biegungen in einem gewellten Abschnitt 4 sind auch dann vorteilhaft, wenn sich Leitungen 1 kreuzen. Das oben liegende Leitungsrohr 1 kann dann in einem sanften und auf Verstopfungen nicht anfälligen Bogen über das untere Leitungsrohr gelegt werden.

Nachfolgend wird die Herstellung einer Rohrleitung 6 bzw. 6' näher erläutert.

Zur Herstellung der Rohrleitung 6 bzw. 6' wird von einem endlosen Rohrstrang ein Leitungsrohr 1 in entsprechender Länge abgelängt. Das Ende, das an die Duschwanne 9 bzw. die Badewanne 10 oder das Bidet 8 angeschlossen werden soll, wird so abgelängt, dass ein glatter Abschnitt 3' ein freies Ende bildet. Das freie Ende kann auch aus mehreren glattzylindrischen Abschnitten 3 bestehen resp. entsprechend abgelängt werden. Dieses freie Ende wird nun auf das Verbindungsstück 13 aufgesteckt. Hierbei schnappen die Rastzungen 14 am Haltemittel 2a' ein und fixieren damit das Leitungsrohr 1 am Verbindungsstück 13. Das Verbindungsstück 13 wird nun mit dem angeschlossenen Leitungsrohr 1 auf das Formstück 17 aufgeschoben. Die Badewanne 10 bzw. die Duschwanne 9 ist nun an die Rohrleitung 6' bzw. 6 angeschlossen. Die Rohrleitung 6 bzw. 6' wird nun so verlegt, dass jeweils das andere Ende mit dem Fallstrang 11 verbunden werden kann. Aufgrund der Flexibilität des Leitungsrohres kann dieses mit Gefälle und mehreren Richtungsänderungen verlegt werden. Das Verlegen ist auch im Hinblick auf einen optimalen Wassertransport möglich. Der Anschluss an den Fallstrang 11 kann ebenfalls mit einer Steckverbindung erfolgen. Hier sind jedoch auch andere Verbindungsarten möglich.

Die Herstellung des Leitungsrohres 1 bzw. des Endlosleitungsstranges erfolgt durch Koextrudieren. Hierbei wird ein Aussenrohr corrugiert und auf ein glattes Innenrohr koextrudiert. Die Herstellung von zweischichtigen Kunststoffrohren mit einer glatten Innenseite 12 und einer corrugierten Aussenseite ist an sich bekannt. Es wird hierzu auf die US 4,145,387 verwiesen. Vorteilhafte Masse für ein Leitungsrohr 1, das als Abwasserrohr verwendbar ist, ergeben sich aus den Figuren 2. Der Abstand L zwischen zwei benachbarten Haltemitteln 2 beträgt beispielsweise 45mm und ist vorzugsweise grösser als der Aussendurchmesser A des glattzylindrischen Abschnitts 3. Der Aussendurchmesser D der Haltemittel 2 beträgt beispielsweise 49mm und ist vorzugsweise grösser als der Aussendurchmesser d der Rippen 5. Die Breite B der Haltemittel 2 ist zudem vorzugsweise grösser als die Breite b der Rippen 5.

Die Enden zweier Leitungsrohre 1 können gemäss Figur 8 dicht mit einem Verbindungsstück 13' miteinander verbunden werden. Jedes Leitungsrohr 1 ist so abgelängt, dass jeweils ein glattzylindrischer Abschnitt 3' in das Verbindungsstück 13' eingreift und ein Haltemittel 2'a mit einem Verbindungsring 21 verrastet ist. Auch diese Verbindung ist schnell und einfach herstellbar.

## Patentansprüche

1. Leitungsrohr aus Kunststoff, mit glattzylindrischen Abschnitten (3) sowie aussenseitig gewellten Abschnitten (4), wobei die glattzylindrischen Abschnitte (3) jeweils aussenseitig in Rohrlängsrichtung im Abstand zweinander angeordnete Haltemittel (2) aufweisen, **dadurch gekennzeichnet, dass** die aussenseitig gewellten Abschnitte (4) innenseitig glatt sind und die Haltemittel (2) an den glattzylindrischen Abschnitten (3) jeweils in gleichen Abständen zueinander angeordnet sind.

2. Leitungsrohr nach Anspruch 1, **dadurch gekennzeichnet, dass** die Haltemittel (2) umlaufende Rippen sind.

3. Leitungsrohr nach Anspruch 1 oder 2, **dadurch gekennzeichnet, dass** jeder glattzylindrische Abschnitt (3) zwei Endhaltemittel (2a) aufweist, die unmittelbar an einen aussenseitig gewellten Abschnitt (4) anschliessen.

4. Leitungsrohr nach einem der Ansprüche 1 bis 3, **dadurch gekennzeichnet, dass** die gewellten Abschnitt (4) flexibel sind und zu einem Bogen biegbar sind.

5. Leitungsrohr nach einem der Ansprüche 1 bis 4, **dadurch gekennzeichnet, dass** der Abstand (L) zwischen zwei benachbarten Haltemitteln (2) grösser ist als der Rohraussendurchmesser (A) in einem glattzylindrischen Abschnitt (3).

6. Leitungsrohr nach einem der Ansprüche 2 bis 5, **dadurch gekennzeichnet, dass** die Rippen (5) einen Aussendurchmesser (D) und/oder eine Breite (B) aufweisen, der bzw. die grösser ist als der entsprechende Aussendurchmesser (d) bzw. Breite (b) der Rippen (5) des gewellten Abschnittes (4).

7. Leitungsrohr nach einem der Ansprüche 1 bis 6, **dadurch gekennzeichnet, dass** die aussenseitig gewellten Abschnitt (4), die Haltemittel (5) und die glattzylindrischen Abschnitte (3) als Aussenrohr corrugiert und auf ein glattes Innenrohr koextrudiert sind.

8. Rohrleitung mit wenigstens einem Leitungsrohr (1) gemäss Anspruch 1 und wenigstens einem Verbindungsstück (13) das dicht mit dem einen Ende des Leitungsrohres (1) verbunden ist, **dadurch gekennzeichnet, dass** das Verbindungsstück (13) ein Schnapporgan (14) aufweisst, das auf ein Haltemittel (2a') des Leitungsrohres (1) aufgerastet ist.

9. Rohrleitung nach Anspruch 8, **dadurch gekennzeichnet, dass** das Leitungsrohr (1) mit einem glattzylindrisch Abschnitt (3') als freies Ende in eine kreiszylindrische Tasche (27) des Verbindungsstücks (13)eingreift.

10. Rohrleitung nach Anspruch 9, **dadurch gekennzeichnet, dass** die kreiszylindrische Tasche (27) durch einen innenseitig angeformten Führungsteil (16) gebildet ist.

11. Rohrleitung nach Anspruch 10, **dadurch gekennzeichnet, dass** das Verbindungsstück (13) in ein Formstück (17) eingesetzt ist.

12. Verfahren zur Herstellung einer Rohrleitung mit wenigstens einem Leitungsrohr (1) gemäss Anspruch 1 und wenigstens einem Verbindungsstück (13), **dadurch gekennzeichnet, dass** das Leitungsrohr (1) von einem Endlosrohrstrang abgeschnitten wird, wobei wenigstens eine Schnittstelle (25) so gewählt wird, dass ein glattzylindrische Abschnitt (3) ein freies Rohrende bildet.

13. Verfahren nach Anspruch 12, **dadurch gekennzeichnet, dass** der ein freies Rohrende bildende glattzylindrische Abschnitt (3') in das Verbindungsstück (13) eingesteckt wird.

## Claims

1. Conduit pipe made from plastic, with smooth cylindrical portions (3) as well as externally corrugated portions (4), which smooth cylindrical portions (3) incorporate retaining means (2) spaced at a distance apart from one another in the pipe longitudinal direction, **characterised in that** the externally corrugated portions (4) are smooth on the inside and the retaining elements (2) on the smooth cylindrical portions (3) are respectively spaced at equal distances from one another.

2. Conduit pipe as claimed in claim 1, **characterised in that** the retaining means (2) are circumferential ribs.

3. Conduit pipe as claimed in claim 1 or 2, **characterised in that** every smooth cylindrical portion (3) has two end retaining means (2a) directly adjoining an externally corrugated portion (4).

4. Conduit pipe as claimed in one of claims 1 to 3, **characterised in that** the corrugated portions (4) are flexible and can be bent to form an arc.

5. Conduit pipe as claimed in one of claims 1 to 4, **characterised in that** the distance (L) between two adjacent retaining means (2) is bigger than the pipe external diameter (A) in a smooth cylindrical portion (3).

6. Conduit pipe as claimed in one of claims 2 to 5, **characterised in that** the ribs (5) have an external diameter (D) and/or a width (B) that is or are bigger than the corresponding external diameter (d) or width (b) of the ribs (5) of the corrugated portion (4).

7. Conduit pipe as claimed in one of claims 1 to 6, **characterised in that** the externally corrugated portion (4), the retaining means (5) and the smooth cylindrical portions (3) are corrugated as an outer pipe and co-extruded onto a smooth inner pipe.

8. Pipe comprising at least conduit pipe (1) as claimed in claim 1 and at least one connecting piece (13) which is connected to one end of the conduit pipe (1) in a sealed arrangement, **characterised in that** the connecting piece (13) has a snap-fit element (14) which is latched onto a retaining means (2a=) of the conduit pipe (1).

9. Pipe as claimed in claim 8, **characterised in that** the conduit pipe (1) locates in a circular cylindrical pocket (27) of the connecting piece (13) by means of a smooth cylindrical portion (3') serving as a free end.

10. Pipe as claimed in claim 9, **characterised in that** the circular cylindrical pocket (27) is formed by means of an internally formed guide part (16).

11. Pipe as claimed in claim 10, **characterised in that** the connecting piece (13) is inserted in a moulded piece (17).

12. Method of manufacturing a pipe comprising at least one conduit pipe (1) as claimed in claim 1 and at least one connecting piece (13), **characterised in that** the conduit pipe (1) is cut to length from an endless pipe length and at least one cutting point (25) is selected so that a smooth cylindrical portion (3) constitutes a free pipe end.

13. Method as claimed in claim 12, **characterised in that** the smooth cylindrical portion (3') constituting a free pipe end is inserted in the connecting piece (13).

## Revendications

1. Tube de conduite en matière plastique, comportant des tronçons cylindriques lisses (3) ainsi que des tronçons (4) ondulés sur leur extérieure, les tronçons cylindriques lisses (3) comportant respectivement des moyens de retenue (2) disposés sur la face extérieure à distance réciproque dans la direction longitudinale du tube, **caractérisé en ce que** les tronçons (4) ondulés sur la face extérieure sont lisses sur la face intérieure et les moyens de retenue (2) sont disposés sur les tronçons cylindriques lisses (3) respectivement à des distances réciproques identiques.

2. Tube de conduite selon la revendication 1, **caractérisé en ce que** les moyens de retenue (2) sont des nervures périphériques.

3. Tube de conduite selon la revendication 1 ou 2, **caractérisé en ce que** chaque tronçon cylindrique lisse (3) comporte des moyens de retenue finals, qui se raccordent directement au tronçon (4) ondulé sur la face extérieure.

4. Tube de conduite selon l'une des revendications 1 à 3, **caractérisé en ce que** les tronçons ondulés (4) sont flexibles et peuvent être coudés pour former un coude.

5. Tube de conduite selon l'une des revendications 1 à 4, **caractérisé en ce que** la distance (L) entre deux moyens de retenue voisins (2) est supérieure au diamètre extérieur (A) du tube dans un tronçon cylindrique lisse (3).

6. Tube de conduite selon l'une des revendications 2 à 5, **caractérisé en ce que** les nervures (2) possèdent un diamètre extérieur (D) et/ou une largeur (B), qui est supérieure au diamètre extérieur correspondant (d) ou à la largeur (b) des nervures (5) du tronçon ondulé (4).

7. Tube de conduite selon l'une des revendications 1 à 6, **caractérisé en ce que** le tronçon (A), qui est ondulé sur le côté extérieur, les moyens de retenue (5) et les tronçons cylindriques lisses (3) sont cannelés en tant que tube extérieur et sont extrudés sur un tube intérieur lisse.

8. Conduite tubulaire comportant au moins un tube de conduite (1) selon la revendication 1, et au moins un élément de liaison (13), qui est relié d'une manière étanche à une extrémité du tube de conduite (1), **caractérisée en ce que** l'élément de liaison (13) comporte un organe d'encliquetage (14), qui est encliqueté sur un moyen de retenue (2a') du tube de conduite (1).

9. Conduite tubulaire selon la revendication 8, **caractérisée en ce que** le tube de conduite (1) engrène, par un tronçon cylindrique lisse (3') en tant qu'extrémité libre, dans un logement en forme de cylindre circulaire (27) de l'élément de liaison (13).

10. Conduite tubulaire selon la revendication 9, **caractérisée en ce que** le logement (2) en forme de cylindre circulaire (27) est formé par une partie de guidage (16) formé sur le côté intérieur.

11. Conduite tubulaire selon la revendication 10, **caractérisée en ce que** l'élément de liaison (13) est inséré dans une pièce de forme (17).

12. Procédé pour fabriquer une conduite tubulaire comportant au moins un tube de conduite (1) selon la revendication 1 et au moins un élément de liaison (13), **caractérisé en ce que** le tube de conduite (1) est découpé à partir d'un élément de tube sans fin, au moins une interface (25) étant choisie de telle sorte qu'un tronçon cylindrique lisse (3) forme une extrémité libre du tube.

13. Procédé selon la revendication 12, **caractérisé en ce que** le tronçon cylindrique lisse (3') formant l'extrémité libre du tube est enfiché dans l'élément de liaison (13).
